# EUROPÄISCHE PATENTSCHRIFT

(11) **EP 3 981 654 B1**
(45) Veröffentlichungstag und Bekanntmachung des Hinweises auf die Patenterteilung: **30.11.2022**
(21) Anmeldenummer: 21400019.2
(22) Anmeldetag: 06.08.2021
(51) Int. Cl.: B60T 7/20, B60T 13/08, B62D 59/04

(54) **ELEKTROMECHANISCHE BREMSVERRIEGELUNG FÜR EINEN ELEKTRISCH ANGETRIEBENEN SCHUBANHÄNGER**
ELECTROMECHANICAL BRAKE LOCK FOR AN ELECTRICALLY DRIVEN PUSHING TRAILER
VERROUILLAGE DE FREIN ÉLECTROMÉCANIQUE POUR UNE REMORQUE ÉLECTRIQUE

(30) Priorität: 06.10.2020 DE 102020006249
(43) Veröffentlichungstag der Anmeldung: 13.04.2022
(73) Patentinhaber: Thiel, Karl, 22763 Hamburg (DE)
(72) Erfinder: Thiel, Karl, 22763 Hamburg (DE)

(56) Entgegenhaltungen:
- DE-A1- 19 624 488
- DE-A1-102010 051 838
- DE-U1- 20 112 844

## Beschreibung

Die Erfindung bezieht sich auf eine elektromechanische Bremsverriegelung für einen elektromotorisch angetriebenen Schubanhänger mit mechanischer Auflaufbremse wie er vorzugsweise als Fahrradanhänger Verwendung findet, wobei während des Vortriebs eine elektromagnetisch aktivierbare Betätigungsstange von einer elektromagnetischen Spule aktiviert wird, um den Schub vom Chassis in den gegenüber diesem beweglichen Teil des Deichselapparates einzuleiten.

Bei derartigen Anordnungen stellt die mechanische Auflaufbremse einen sicheren Betrieb eines solchen Anhängers auch bei Ausfall der Elektrik her und ist deshalb bei grösserer Gesamtmasse unverzichtbar.

Ein solcher Anhänger wird gemäss der DE 10 2015 006 160 B4 vorgeschlagen und kann mit beliebigen Antrieben wie Pressluftmotor, Verbrennungsmotor, Sterlingmotor etc. betrieben werden, Es bedarf also nicht zwingend eines elektrischen Antriebes.

Wird jedoch eine zusätzliche Motorbremse eingesetzt, um die mechanische Betriebsbremse zu entlasten oder gar die Batterie beim Bremsen rekuperativ aufzuladen, wird vorzugsweise ein dazu geeigneter Elektromotor verwendet. Eine solche Lösung die die voneinander unabhängige Funktion von mechanischer Auflaufbremse und Motorbremse in einem Schubanhänger ermöglicht ist in der DE 10 2017 007 373 B3 dargestellt. In den beiden bekannten Anordnungen erfolgt die Verriegelung des Deichselapparates mechanisch durch das an der drehbar gegenüber dem Chassis gelagerten Motorachse wirksame Reaktionsmoment. Dieses erzeugt über eine Drehmomentstütze am Deichselapparat die dem Schub des Motors entgegenwirkende Kraft zur Verriegelung der Deichsel um die Funktion der Auflaufbremse beim Schubbetrieb zu verhindern.

Bei einem elektrischen Antrieb lässt sich die Verriegelung des Deichselapparates auch elektromechanisch bewerkstelligen, wobei die drehbare Achslagerung eingespart werden kann. Eine Lösung dazu bietet die DE 196 24 488 A1 an. Eine mechanisch bzw. elektromechanisch betätigte Sperrklinke verriegelt sich bei Schubbetrieb gegen eine Zahnstange. Diese Lösung kann jedoch bei abrupten Notbremsungen versagen. Bei starker Schubwirkung auf die Deichsel wie sie bei maximalem Motorschub auftritt, aber mehr noch bei Vollbremsung, ist aufgrund des hohen Flächendrucks zwischen Sperrklinke und Zahnstange große Reibung vorhanden. Findet zwischen Schubphase und Notbremsung kein Lastwechsel statt, ist ein sicheres Lösen der Sperrklinke nicht gewährleistet und ein Versagen der Auflaufbremse tritt ein.

DE 10 2010 051 838 A1 offenbart einen Anhänger für ein Fahrrad mit einer auf das Rad oder die Räder des Anhängers wirkenden Bremse. Eine auf die Bremse des Anhängers wirkende elektronische Logikschaltung ist vorgesehen, die so eingerichtet ist, dass der Anhänger im Schiebebetrieb und beim Abbremsen des Fahrrads keine merkliche Rückwirkung auf das Fahrverhalten des Fahrrads ausübt.

Die Aufgabe der Erfindung ist es, eine elektromechanische Bremsverriegelung für einen elektrisch angetriebenen Schubanhänger mit einer mechanischen Auflaufbremse zu schaffen, die eine Erhöhung der Bremssicherheit auf einfache Weise gewährleistet.

Die Lösung dieser Aufgabe erfolgt erfindungsgemäss dadurch, dass die elektromechanische Spule während des Vortriebs vom gesamten Strom durchflossen wird, die den Kontroller mit Energie versorgt.

Weitere vorteilhafte Ausgestaltungen sind durch die Merkmale der Unteransprüche gekennzeichnet.

In den Zeichnungen sind Ausführungsbeispiele der Erfindung schematisch dargestellt. Es zeigen:
- Fig. 1: eine Anordnung mit einer Stellung von Betätigungsstange und Deichselapparat während des Schubbetriebes,
- Fig. 2: eine Stellung von Betätigungsstange und Deichselapparat während des Bremsvorganges,
- Fig. 3: eine Funktion mittels Umlenk-/Übersetzungshebel während des Schubbetriebes,
- Fig. 4: eine Funktion mittels Umlenk-/Übersetzungshebel während des Bremsens,
- Fig. 5: eine Anordnung mittels Seilzug und Umlenk-/Übersetzungshebel während des Schubbetriebes.

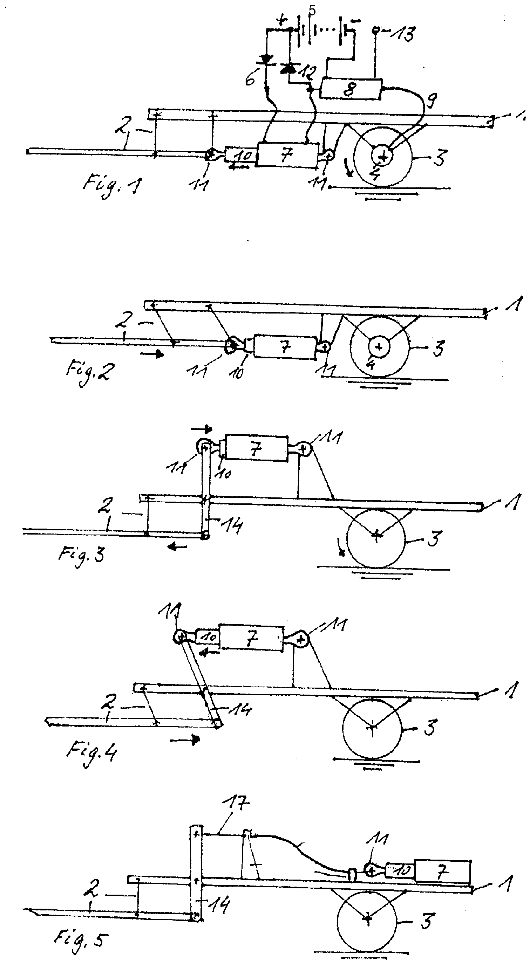

In den Darstellungen sind alle erforderlichen Betriebszustände erläutert. Auf mechanische Bremsen und ihres Übertragungsmechanismus wird der Übersichtlichkeit wegen verzichtet, wobei lediglich der bremsauslösende Deichselapparat ( 2 ) als Schwingenkonstruktion dargestellt ist. Selbstverständlich sind alle dargestellten Funktionen auch für gegeneinander verschiebbare Teleskoprohrkonstruktionen anwendbar. An einem Chassis ( 1 ) sind der bewegliche, bremsauslösende Deichselapparat ( 2 ) mit Parallelogrammschwinge , mindestens ein angetriebenes Rad ( 3 ), in Fig.1 und 2 mit Motor ( 4 ) dargestellt und eine elektromagnetische Spule ( 7 ) in einem Gehäuse mit elektromagnetisch aktivierbarer Betätigungsstange ( 10 ) , befestigt mit Gelenkbolzen ( 11 ) zwischen Deichselapparat ( 2 ) und Chassiskonstruktion (1 ). Als Energiespeicher für den Antrieb werden vorzugsweise elektrische Batterien ( 5 ) als Gleichstromquelle verwendet. Der positive als auch der negative Anschluss der Batterie ( 5 ) sind üblicherweise mit dem Kontroller ( 8 ) direkt verbunden. Über Steuerleitungen ( 13 ) werden dem Kontroller ( 8 ) Signale zum Motorbetrieb oder zum Motorbremsen übermittelt.

Zur Vermeidung oben genannter Nachteile von Lösungen mit Zahnstangen und Sperrklinken wird auf diese verzichtet. Stattdessen wird in den über den Kontroller ( 8 ) laufenden Stromfluss zwischen den Batterieanschlüssen eine elektromagnetische Spule ( 7 ) eingefügt in deren Inneren eine elektromagnetisch aktivierbare Betätigungsstange ( 10 ) beweglich angeordnet ist, die während des Schubbetriebes den Schub vom Chassis ( 1 ) in den beweglichen Deichselapparat ( 2 ) einleitet und somit das Zugfahrzeug schiebt. In Fig. 1 und 2 ist die Betätigungsstange als Stößel dargestellt, der beim Schubbetrieb aus der elektromagnetischen Spule ( 7 ) herausfährt, um das Einfahren des Anhängers in die Auflaufbremse zu verhindern. Fig. 1 zeigt die Stellung von Betätigungsstange ( 10 ) und Deichselapparat ( 2 ) während des Schubbetriebes, Fig. 2 während des Bremsens. Beim Bremsen ist die elektromagnetische Spule ( 7 ) stromlos und damit die elektromagnetisch aktivierbare Betätigungsstange ( 10 ) sofort frei beweglich, ungehindert von Zahnstangen, Sperrklinken oder ähnlichen Koppelelementen. Wichtig für die Funktion ist es, die elektromagnetische Spule ( 7 ) so zu dimensionieren, dass bei jedem Betriebszustand während des Schubes die Betätigungskraft der elektromagnetisch aktivierbaren Betätigungsstange ( 10 ) größer ist als die am Aufstandspunkt des angetriebenen Rades ( 3 ) wirksame Schubkraft des Motors ( 4 ) . Weil der Strom, der zwischen den Batterieanschlüssen durch Kontroller ( 8 ) und Spule ( 7 ) fließt, sich proportional zum induzierten Schub verhält, lässt sich diese Aufgabe einfach lösen. Um Rekuperation und Motorbremsung ohne Stromfluss durch die elektromagnetische Spule ( 7 ) zu ermöglichen sind die Dioden ( 6 ) und ( 12 ) in den Stromlauf geschaltet. Während des Schubbetriebes fließt der Strom vom Pluspol der Batterie ( 5 ) durch die Diode ( 6 ), durch die elektromagnetische Spule ( 7 ), durch den Kontroller ( 8 ) zum Minuspol. Bei Bremsbetrieb fließt der Strom vom Kontroller ( 8 ) über die Diode ( 12 ) direkt in die Batterie ( 5 ), weil der Stromfluß durch die elektromagnetische Spule ( 7 ) von der Diode ( 6 ), nun in Sperrrichtung, verhindert wird. Damit wird unerwünschte Aktion von elektromagnetischer Spule ( 7 ) und elektromagnetisch aktivierbarer Betätigungsstange ( 10 ) verhindert. Diese Funktion ist auch durch Verwendung von Relais oder aktiven Leistungshalbleitern zu erzielen.

Bei großem Schub, beispielsweise durch Verwendung von Getrieben im Antrieb, kann die Verwendung großer elektromagnetischer Spulen ( 7 ) sowie schwerer elektromagnetisch aktivierbarer Betätigungsstangen ( 10 ) erforderlich sein. Um diesen Aufwand zu reduzieren, bieten sich die Lösungen nach Fig. 3 und 4 an. Hier ist der hintere Hebel ( 14 ) der Parallelogrammschwinge als Umlenkhebel ausgeführt. Damit kann eine Übersetzung der Betätigungskraft von elektromagnetischer Spule ( 7 ) und Betätigungsstange ( 10 ) mit dem Ziel leichterer Bauteile bewirkt werden. Fig. 3 zeigt einen Schubbetrieb, Fig. 4 einen Bremsbetrieb. Fig. 5 zeigt eine mittelbare Betätigung über Seilzug ( 17 ). Es ist auch eine pneumatische oder hydraulische Betätigung möglich. Die elektromagnetisch aktivierbare Betätigungsstange ( 10 ) ist in den Fig.1 und 2 als Stößel, in den Fig. 3 bis 5 als Zugstange dargestellt.

Ein Vorteil dieser erfindungsgemässen Lösung gegenüber anderen sensorisch oder elektronisch geregelten Bremskonzepten liegt in seiner einfachen Anwendbarkeit für alle Arten von elektrischen Antrieben sofern eine Gleichstromquelle als Speicher für die Antriebsenergie benutzt wird . Es spielt keine Rolle, ob hinter dem Kontroller ( 8 ) Gleichstrommotoren oder fremdkommutierte Wechselstrommotoren verwendet werden, zwischen Kontroller ( 8 ) und Batterie ( 5 ) fließt immer Gleichstrom. Weil nur dieser für die Verriegelung des Deichselapparates ( 2 ) benötigt wird und auch die Rekuperation bzw. Motorbremsung nicht behindert wird, ist keinerlei Eingriff in die Motorregelung oder Signalsteuerung erforderlich, wodurch problemlose Verwendung an den allermeisten industriell lieferbaren Kontrollern und Motoren ermöglicht wird.

## Patentansprüche

1. Elektromechanische Bremsverriegelung für einen elektrisch angetriebenen Schubanhänger mit mechanischer Auflaufbremse, wobei während des Vortriebs eine elektromagnetisch aktivierbare Betätigungsstange ( 10 ) von einer elektromagnetischen Spule ( 7 ) aktiviert wird um den Schub vom Chassis ( 1 ) in den gegenüber diesem beweglichen Teil des Deichselapparates ( 2 ) einzuleiten,
**dadurch gekennzeichnet, dass** die elektromagnetische Spule ( 7 ) während des Vortriebs vom gesamten Strom durchflossen wird, der den Kontroller ( 8 ) mit Energie versorgt.

2. Elektromechanische Bremsverriegelung nach Anspruch 1,**dadurch gekennzeichnet, dass** nach Abschalten des Vortriebs die elektromagnetische Spule ( 7 ) stromlos wird, somit die Einleitung des Schubs vom Chassis ( 1 ) in den beweglichen Teil des Deichselapparates ( 2 ) aufgehoben wird und somit die Auflaufbremse ihre Wirkung entfalten kann.

3. .Elektromechanische Bremsverriegelung nach Anspruch 2,
**dadurch gekennzeichnet, dass** nach Abschalten des Vortriebs eine Motorbremsung bzw. rekuperative Bremsung erfolgen kann bei vollem Funktionserhalt der mechanischen Auflaufbremse

4. Elektromechanische Bremsverriegelung nach Anspruch 3,
**dadurch gekennzeichnet, dass** durch Einfügen von Dioden ( 6, 12 ) die elektromagnetische Spule ( 7 ) stromlos wird.

5. Elektromechanische Bremsverriegelung nach Anspruch 3,
**dadurch gekennzeichnet, dass** durch Einfügen von aktiven Leistungs-Halbleitern die elektromagnetische Spule ( 7 ) stromlos wird.

6. Elektromechanische Bremsverriegelung nach Anspruch 3,
**dadurch gekennzeichnet, dass** durch Einfügen von einem oder mehreren Relais die elektromagnetische Spule ( 7 ) stromlos wird.

7. Elektromechanische Bremsverriegelung nach einem der Ansprüche 1 bis 6,
**dadurch gekennzeichnet, dass** die elektromagnetisch aktivierbare Betätigungsstange ( 10 ) über einen Umlenkhebel ( 14 ) den beweglichen Teil des Deichselapparates ( 2 ) beaufschlagt.

8. Elektromechanische Bremsverriegelung nach einem der Ansprüche 1 bis 7,
**dadurch gekennzeichnet, dass** die elektromagnetisch aktivierbare Betätigungsstange ( 10 ) mittelbar über Seilzug ( 17 ) oder Hydraulik oder Pneumatik den beweglichen Teil des Deichselapparates ( 2 ) beaufschlagt.

## Claims

1. Electromechanical brake lock for an electrically driven pushing trailer with mechanical overrun brake, wherein during propulsion an electromagnetically activatable push rod (10) is activated by an electromagnetic coil (7) to introduce the thrust from the chassis (1) into the part of the drawbar apparatus (2) that is movable relative thereto,
**characterized in that** during the propulsion all of the current that supplies the controller (8) with energy passes through the electromagnetic coil (7).

2. Electromechanical brake lock according to Claim 1, **characterized in that** after the propulsion is switched off the coil (7) is deenergised, thereby stopping the introduction of the thrust from the chassis (1) into the movable part of the drawbar apparatus (2), thereby enabling the overrun brake to take effect.

3. Electromechanical brake lock according to Claim 2, **characterized in that** after the propulsion is switched off a motor braking or regenerative motor braking can take place while retaining the full function of the mechanical overrun brake.

4. Electromechanical brake lock according to Claim 3, **characterized in that** the electromagnetic coil (7) is deenergised by the insertion of diodes (6, 12).

5. Electromechanical brake lock according to Claim 3, **characterized in that** the electromagnetic coil (7) is deenergised by the insertion of active power semiconductors.

6. Electromechanical brake lock according to Claim 3, **characterized in that** the electromagnetic coil (7) is deenergised by the insertion of one or more relays.

7. Electromechanical brake lock according to any one of Claims 1 to 6, **characterized in that** the electromagnetically activatable push rod (10) impinges on the movable part of the drawbar apparatus (2) via a reversing lever (14).

8. Electromechanical brake lock according to any one of Claims 1 to 7, **characterized in that** the electromagnetically activatable push rod (10) indirectly impinges on the movable part of the drawbar apparatus (2) via a cable pull (17) or hydraulic means or pneumatic means.

## Revendications

1. Verrouillage de frein électromécanique pour une remorque électrique avec frein à inertie mécanique, sachant que pendant la propulsion une barre de commande pouvant être activée de façon électromagnétique (10) est activée par une bobine électromagnétique (7) pour engager la poussée du châssis (1) dans la partie mobile du système de timon (2) opposée à celui-ci,
**caractérisé en ce que** la bobine électromagnétique (7) est traversée pendant la propulsion par tout le courant, qui alimente le contrôleur (8) en énergie.

2. Verrouillage de frein électromécanique selon la revendication 1,
**caractérisé en ce que** la bobine électromagnétique (7) est sans courant après arrêt de la propulsion, l'engagement de la poussée du châssis (1) étant de ce fait' supprimé dans la partie mobile du système de timon (2) et le frein à inertie pouvant de ce fait déployer son effet.

3. Verrouillage de frein électromécanique selon la revendication 2,
**caractérisé en ce qu'**un freinage moteur ou freinage récupératif peut avoir lieu, après arrêt de la propulsion, avec maintien de fonctionnement complet de fonctionnement du frein à inertie mécanique.

4. Verrouillage de frein électromécanique selon la revendication 3,
**caractérisé en ce que** la bobine électromagnétique (7) est sans courant grâce au montage de diodes (6, 12).

5. Verrouillage de frein électromécanique selon la revendication 3,
**caractérisé en ce que** la bobine électromagnétique (7) est sans courant grâce au montage de semi-conducteurs de puissance actifs.

6. Verrouillage de frein électromécanique selon la revendication 3,
**caractérisé en ce que** la bobine électromagnétique (7) est sans courant grâce au montage d'un ou plusieurs relais.

7. Verrouillage de frein électromécanique selon l'une quelconque des revendications 1 à 6,
**caractérisé en ce que** la barre de commande pouvant être activée de façon électromagnétique (10) sollicite la partie mobile du système de timon (2) par le biais d'un levier de renvoi (14).

8. Verrouillage de frein électromécanique selon l'une quelconque des revendications 1 à 7,
**caractérisé en ce que** la barre de commande pouvant être activée de façon électromagnétique (10) sollicite la partie mobile de l'appareil de timon (2) indirectement par le biais d'une commande par câble (17) ou d'un système hydraulique ou d'un système pneumatique.
